# EUROPEAN PATENT SPECIFICATION

(11) **EP 4 194 273 B1**
(45) Date of publication and mention of the grant of the patent: **11.10.2023**
(21) Application number: 21213875.4
(22) Date of filing: 10.12.2021
(51) Int. Cl.: B60R 9/06, B60R 9/10

(54) **A LOAD CARRIER**
LASTTRÄGER
TRANSPORTEUR DE CHARGE

(43) Date of publication of application: 14.06.2023
(73) Proprietor: Thule Sweden AB, 335 04 Hillerstorp (SE)
(72) Inventor: LARSSON, Wilhelm, 33155 Värnamo (SE); Sandberg, Mikael, 30272 Halmstad (SE); De Miguel Carmona, José Antonio, 55466 Jönköping (SE)
(74) Representative: Wallentin, Lars

(56) References cited:
- WO-A1-2021/094713
- US-A- 5 363 996
- US-A- 5 456 564
- US-B1- 6 286 738

## Description

### TECHNICAL FIELD

The present disclosure relates to a load carrier for a vehicle, wherein the load carrier comprises an attachment arrangement for attaching the load carrier at a rearward facing door or tailgate of the vehicle.

### BACKGROUND OF THE INVENTION

Load carriers for vehicles, such as load carriers for carrying bicycles or any other load, may be attached to a vehicle at different sides of the vehicle. For example, it is well-known to provide bicycle carriers which are attachable on top of the vehicle above the vehicle roof, via e.g. vehicle roof racks. It is also known to attach load carriers at vehicle rearward sides, such that the loads can be stored behind the vehicles.

Load carriers for vehicle rearward sides may be attached directly to the vehicle via an attachment arrangement of the load carrier which comprises one or more attachment members. For certain types of vehicles - including but not limited to minibuses, vans, station wagons and SUV's - it is for example known to attach load carriers to the rearward facing door or tailgate.

An attachment arrangement for such a load carrier may typically comprise two upper attachment members for attaching the load carrier to the vehicle and for suspending the load carrier thereto via an upper portion of the vehicle at the rearward facing door or tailgate. The attachment arrangement may also comprise at least one lower attachment member for attaching the load carrier to a lower portion of the vehicle at the rearward facing door or tailgate. The lower portion of the vehicle is provided below the at least one upper portion, as seen in a vertical direction of the vehicle, also corresponding to a vertical direction, or height direction, of the attachment arrangement and of the load carrier when attached to the vehicle.

Typically, the upper attachment members suspend the load carrier and thereby prevent it from falling off due to gravitational forces. They also typically prevent the attachment arrangement and/or the load carrier from moving outward from the vehicle in its rearward direction when attached thereto. The at least one lower attachment member, on the other hand, may prevent the attachment arrangement and/or the load carrier from moving upward in the vertical direction. Thereby, the load carrier is prevented from releasing due to upwardly acting forces generated when the vehicle e.g. drives over a bump or the like. This may be accomplished in that the at least one lower attachment member engages with a downwardly facing edge of the rearwardly facing door or tailgate. Thus, the downwardly facing edge prevents the at least one lower attachment member from moving upwards when an upwardly directed force is acting on the load carrier. The at least one lower attachment member is typically also, or alternatively, designed to prevent the attachment arrangement and/or the load carrier from moving outwards from the vehicle in its rearward direction when attached thereto.

The load carrier may also comprise a load carrier platform for carrying a load. The load may for example be one or more bicycles, even though also other types of loads may be accommodated on the load carrier platform.

Typically, the load carrier is adapted so that the load carrier platform can be pivoted between a stow away position and a use position for carrying the load. In the stow away position, the load carrier platform is folded in towards the attachment arrangement. Further, in the use position, the load carrier platform is folded out with respect to the attachment arrangement in a rearward direction of the load carrier, corresponding to a rearward direction of the vehicle when the load carrier is mounted, i.e. attached, thereto.

Even though the above-mentioned load carriers provide a reliable and robust attachment to the vehicle and also enables the loads to be carried in an efficient manner behind the vehicle, it has been realized that there is still a need to provide further improved and/or alternative load carriers. For example, it has been realized that the folding mechanism is not always suitable for all types of vehicles, and also not for all types of rearward facing doors and tailgates.

According to its abstract, WO2021094713A1 relates to a modular carrying system for mounting onto the rear of a vehicle and comprises an elongate mast provided at one end thereof with a tow mounting member for mounting onto a towing or hitch attachment of the said vehicle wherein the elongate mast is further provided with a channel extending along a portion of the length thereof and a mounting member configured to be mounted in the channel. It further discloses a mounting tray which can be mounted onto the mast. The mounting tray is configured to pivot from a position substantially parallel to the mast to a position substantially perpendicular to the mast.

US6286738B1 and US5363996A relate to a bicycle rack for carrying a bicycle adjacent the rear of a vehicle.

US5456564A relates to a winch operated vehicle mounted carrier comprised of an upper rectangular section having a securement bar extending inwardly therefrom.

### SUMMARY OF THE INVENTION

In view of the above, an object of the present invention is to provide an improved load carrier which alleviates at least one of the drawbacks of the prior art. For example, an object of the present invention is to provide a load carrier with an improved folding mechanism, or at least to provide a load carrier which is a suitable alternative to known load carriers.

The object is achieved by the subject-matter of independent claim 1. Advantageous embodiments may be found in the dependent claims and in the accompanying description and drawings.

Thus, there is provided a load carrier for a vehicle, comprising,
- an attachment arrangement for attaching the load carrier at a rearward facing door or tailgate of the vehicle,
- a load carrier platform for carrying a load, such as one or more bicycles.

The load carrier is adapted so that the load carrier platform can be pivoted about a pivot axis between a stow away position and a use position for carrying the load, wherein, in the stow away position the load carrier platform is folded in towards the attachment arrangement, and, in the use position the load carrier platform is folded out with respect to the attachment arrangement in a rearward direction of the load carrier.

Furthermore, the pivot axis is provided offset from the attachment arrangement in the rearward direction.

By offset in the rearward direction from the attachment arrangement is herein meant that the pivot axis is provided further behind in the rearward direction with respect to the attachment arrangement. The rearward direction of the load carrier corresponds to a rearward direction of the vehicle when the load carrier is attached thereto.

The load carrier extends in a length extension, a height extension and a width extension. The rearward direction extends in the length extension. Furthermore, the height extension of the load carrier is substantially aligned with a height extension of the vehicle when the load carrier is attached thereto. In a similar manner, the width extension of the load carrier is substantially aligned with a width extension of the vehicle when the load carrier is attached thereto. The length, height and width extensions preferably correspond to a Cartesian coordinate system, i.e. the different extensions are perpendicular to each other.

Preferably, the pivot axis extends in the width extension of the load carrier. The width extension typically corresponds to a horizontal extension when the load carrier is attached to a vehicle which is provided on a flat horizontally extending surface.

By the provision of a load carrier as disclosed herein, an improved folding mechanism of the load carrier is achieved. For example, it has been realized that the improved folding mechanism is especially useful for certain types of vehicles, when also using a load carrier platform having the same, or similar, size as known load carriers.

By the improved folding mechanism, the height of the load carrier when the load carrier platform is in the stow away position can be reduced. In particular, the load carrier platform may not extend above the roof of the vehicle when the load carrier platform is in the stow away position. Also, the load carrier platform can still be large enough to carry large, bulky, loads. As such, a compact load carrier is achieved which also is capable of carrying the same amount of loads as previous load carriers.

The improved folding mechanism is achieved in that the pivot axis whereabout the load carrier platform is pivoted is provided offset, i.e. further away, from the attachment arrangement in the rearward direction. This results in that a length from the pivot axis to an outermost portion of the load carrier platform will be shorter compared to if the pivot axis would be provided on the attachment arrangement. As such, when the load carrier platform is provided in the stow away position, and substantially extends upward in the height extension of the load carrier, the load carrier platform will not extend upward in the height extension as far as if the pivot axis would be provided on the attachment arrangement instead. Thereby, it can be avoided that the load carrier platform extends above the roof of the vehicle whilst still enabling a large load carrier platform.

A further advantage of this configuration is that it will enable the attachment arrangement to be made more compact, as seen in the height extension of the load carrier. Since the load carrier platform will not extend as much upward in the height extension when in the stow away position, the load carrier platform may be mounted to the attachment arrangement at a higher position compared to known load carriers. This results in that the attachment arrangement can be made more compact, e.g. allowing its lower attachment members to be provided higher up, as seen in the height extension. It has been realized that this design freedom is especially advantageous for certain types of vehicles. For example, some vehicles may have taillights which are provided relatively high up at the rearward side of the vehicle. By the provision of the load carrier as disclosed herein, these taillights may not be occluded by the load carrier since the attachment arrangement can be made more compact. For example, the load carrier platform, and the lower attachment member(s) of the attachment arrangement, can be provided higher up at the vehicle's rearward side, enabling taillights to be more visible when the load carrier is mounted to the vehicle.

The load carrier platform may be configured to carry loads such as one or more bicycles. For example, the load carrier may be configured to carry two, three, four or more bicycles. The load carrier may be configured so that longitudinal extensions of the bicycles substantially coincide with the width extension of the load carrier when the load carrier carries the bicycles.

Optionally, the attachment arrangement may comprise at least one upper attachment member for attaching the load carrier to an upper portion of the vehicle at the rearward facing door or tailgate. For example, the at least one upper attachment member may be configured to be attached to a vehicle rear spoiler of the vehicle, i.e. the upper portion of the vehicle may be a vehicle rear spoiler. Still optionally, the attachment arrangement may comprise at least one lower attachment member for attaching the load carrier to a lower portion of the vehicle at the rearward facing door or tailgate. The lower portion is thus provided below the upper portion, such as below the vehicle rear spoiler. Accordingly, the at least one upper attachment member is preferably provided above the at least one lower attachment member, as seen along the height extension of the attachment arrangement, which corresponds to the height extension of the vehicle when the attachment arrangement, and thus the load carrier, is attached thereto.

Optionally, the load carrier may be adapted so that a portion of the load carrier platform is provided and extends between the attachment arrangement and the pivot axis when the load carrier platform is in the use position. Thereby, the load carrier platform will be longer than the length between the pivot axis and the outermost portion of the load carrier platform. Consequently, it enables more load to be carried by the load carrier platform when it is in the use position, whilst still avoiding that the load carrier platform extends above the roof of the vehicle when in the stow away position.

According to the invention, the load carrier further comprises at least one connection member, such as at least one arm member, which mechanically connects the load carrier platform to the attachment arrangement, wherein the pivot axis is associated with the at least one connection member, such as the pivot axis extends through the at least one connection member. By using at least one connection member, such as at least one arm member, a rigid and robust connection between the load carrier platform and the attachment arrangement can be achieved, while at the same time the pivot axis is offset from the attachment arrangement in the rearward direction. The at least one connection member may be a separate element with respect to the attachment arrangement, or alternatively the at least one connection member may be an integral part of the attachment arrangement. For example, the at least one connection member may be attached to the attachment arrangement by a fixation means, such as a screw or bolt, a weld etc.

Optionally, the at least one connection member may comprise at least two connection member portions, as seen in a plane defined by the height extension and the rearward direction of the load carrier, wherein one connection member portion extends downward in the height extension, allowing the load carrier platform to be provided further down with respect to the attachment arrangement, and another connection member portion extends in the rearward direction, allowing the pivot axis to be offset from the attachment arrangement in the rearward direction. Still optionally, the at least one connection member may be L-formed. An L-formed connection member implies that the connection member comprises at least two connection member portions which extends so that they together form an L-shape. Thereby, the load carrier platform can be provided at a more suitable position with respect to the attachment arrangement, implying a more compact load carrier configuration, taillights more visible etc.

According to the invention, the at least one connection member is attached to the attachment arrangement at an attachment position on the attachment arrangement, wherein the load carrier is adapted so that the pivot axis is provided below the attachment position, at least when the load carrier platform is in the stow away position, as seen in the height extension of the load carrier. Still optionally, the load carrier may further be adapted so that the pivot axis is provided below the attachment position also when the load carrier platform is in the use position.

According to the invention, the load carrier platform comprises one or more load receiving members for receiving a load, wherein the load carrier is adapted so that at least one of the one or more load receiving members is at least partly provided between the attachment position on the attachment arrangement and the pivot axis when the load carrier platform is in the stow away position, as seen in the height extension of the load carrier. This configuration may imply that more load can be loaded onto the load carrier platform. For example, this configuration may allow more bicycles to be carried on the load carrying platform while still the load carrier platform can be prevented from extending above the roof of the vehicle in the stow away position. By way of example, the one or more load receiving members may be members which are adapted to carry and receive bicycles, such as bicycle wheels. For example, a load receiving member may be a wheel tray for receiving a wheel.

Optionally, the at least one connection member may be rigidly fixed to the attachment arrangement. By rigidly fixed is in this context meant that the at least one connection member is non-pivotally fixed to the attachment arrangement. For example, the at least one connection member may be rigidly fixed to the attachment arrangement by at least two offset fixation means, such as screws or bolts, or welds. This implies a rigid and robust connection to the attachment arrangement.

Optionally, the load carrier may be adapted so that the pivot axis is provided above the attachment position when the load carrier platform is in the use position, as seen in the height extension of the load carrier. This configuration enables the load carrier platform to be provided higher up at the rearward side of the vehicle in the use position, implying that the taillights may be more visible.

Optionally, the load carrier may be adapted so that the pivot axis is fixed with respect to the attachment arrangement. This configuration implies a more robust and rigid load carrier.

Optionally, the load carrier may be adapted so that the pivot axis is translatable with respect to the attachment arrangement. This configuration implies a more versatile configuration, allowing the load carrier platform to not only be pivotable about the pivot axis, but also to be translatable with respect to the attachment arrangement. Thereby, by way of example, the load carrier platform may be allowed to be provided higher up at the rearward side of the vehicle when in the use position, and further down when in the stow away position.

Still optionally, the load carrier may further be adapted so that the pivot axis is moved downward with respect to the attachment arrangement when the load carrier platform is pivoted from the use position to the stow away position and so that the pivot axis is moved upward with respect to the attachment arrangement when the load carrier platform is pivoted from the stow away position to the use position, as seen in the height extension of the load carrier.

Optionally, the load carrier may be adapted so that the load carrier platform can be pivoted about an auxiliary pivot axis between the stow away position and the use position. The auxiliary pivot axis is preferably extending in the same direction as the aforementioned pivot axis. This configuration implies a more versatile configuration, i.e. it enables for more freedom of movement of the load carrier platform with respect to the attachment arrangement.

Optionally, the load carrier may further comprise at least one auxiliary connection member, such as at least one auxiliary arm member, which mechanically connects the load carrier platform to the attachment arrangement. Still optionally, the auxiliary pivot axis may be associated with the at least one auxiliary connection member, such as the auxiliary pivot axis extending through the at least one auxiliary connection member. This configuration implies a more versatile load carrier. For example, by having an auxiliary connection member, in addition to the aforementioned connection member, a larger movement freedom of the load carrier platform with respect to the attachment arrangement can be achieved. This in turn may allow the load carrier platform to be more suitably located in the stow away position and in the use position. For example, this may allow the load carrier platform to be provided further down in the stow away position and higher up in the use position, compared to a load carrier platform having less freedom of movement.

Optionally, the load carrier may be adapted so that the pivot axis is provided below the load carrier platform and/or below at least one load receiving member of the load carrier platform when the load carrier platform is in the use position, as seen in the height extension of the load carrier. This configuration implies that the load carrier platform can be provided higher up at the rearward side of the vehicle when in the use position. It further implies that the load carrier platform may be provided closer to the attachment arrangement when in the stow away position, i.e. it may provide a more compact load carrier when the load carrier platform is in the stow away position.

Optionally, when the attachment arrangement comprises at least one lower attachment member for attaching the load carrier to a lower portion of the vehicle at the rearward facing door or tailgate, the pivot axis and/or the auxiliary pivot axis may be provided 0-20 centimeters (cm) from the at least one lower attachment member, as measured in the height extension of the load carrier. For example, the pivot axis and/or the auxiliary pivot axis may be provided 0-15, 0-10 or 0-5 cm from the at least one lower attachment member, as measured in the height extension of the load carrier. The measurement corresponds to a smallest distance between the pivot axis and the at least one lower attachment member and/or to a smallest distance between the auxiliary pivot axis and the at least one lower attachment member, as seen in the height extension of the load carrier. Purely by way of example, the pivot axis and/or the auxiliary pivot axis may, at least in one load carrier platform position, be provided at the same height level as the height level of the at least one lower attachment arrangement. Additionally, or alternatively, the pivot axis and/or the auxiliary pivot axis may be provided above the at least one lower attachment member, as seen in the height extension, and at least when the load carrier platform is in the use position.

### BRIEF DESCRIPTION OF THE DRAWINGS

With reference to the appended drawings, below follows a more detailed description of embodiments of the invention cited as examples.

In the drawings:
Figs. 1a-b show side views of a load carrier according to an example embodiment of the present invention,
Fig. 2 shows a perspective view of a load carrier according to an example embodiment of the present invention,
Figs. 3a-b show side views of a load carrier according to an example embodiment of the present invention,
Figs. 3c-d show perspective views of the load carrier as shown in figs. 3a-b,
Figs. 4a-b show schematic side views of a load carrier according to example embodiments of the present invention,
Fig. 5 shows a schematic side view of a load carrier according to another example embodiment of the present invention, and
Figs. 6a-b show schematic views from the side of a prior art load carrier.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

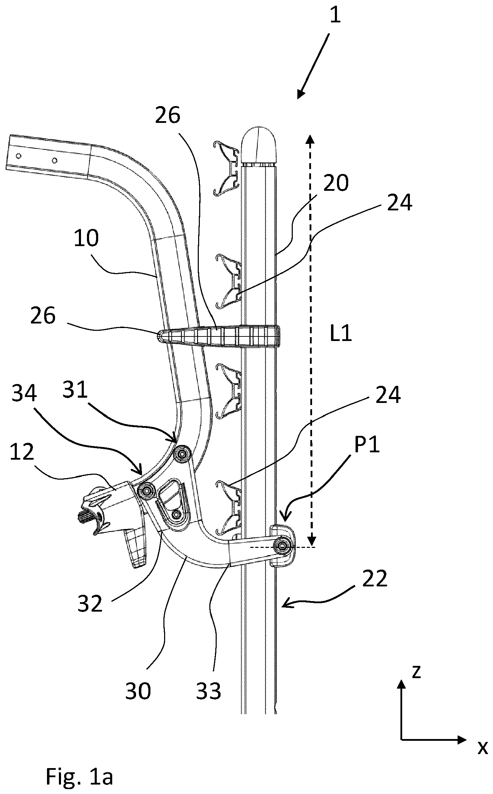

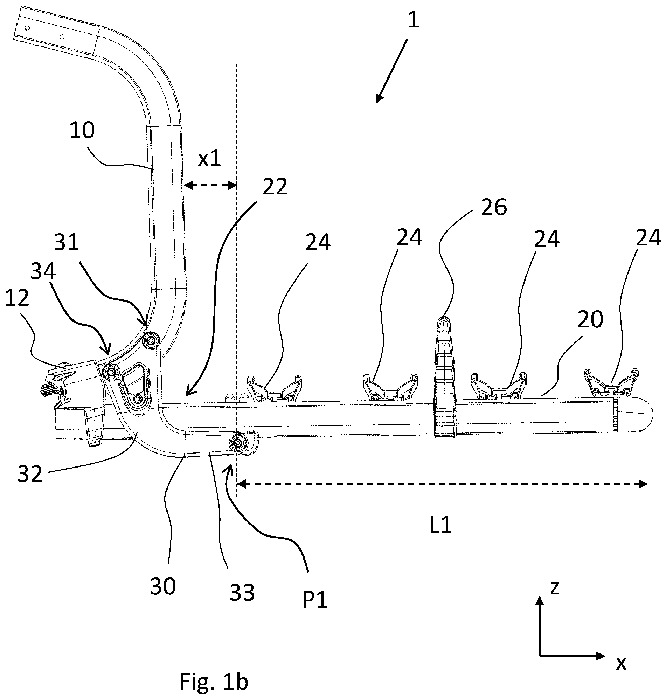

Figs. 1a and 1b show side views of a load carrier 1 for a vehicle according to an example embodiment of the present invention. The load carrier 1 extends in a height extension z and length extension x. The height extension z corresponds to a height extension of a vehicle (not shown) when the load carrier 1 is attached to the vehicle. The length extension x corresponds to the length extension of the vehicle when the load carrier 1 is attached thereto. In the shown embodiment, the length extension x points in a rearward direction, corresponding to a rearward direction of the load carrier 1 and of vehicle when the load carrier 1 is attached thereto.

The load carrier 1 comprises:
- an attachment arrangement 10 for attaching the load carrier 1 at a rearward facing door or tailgate of the vehicle, and
- a load carrier platform 20 for carrying a load, such as one or more bicycles.

The load carrier 1 is adapted so that the load carrier platform 20 can be pivoted about a pivot axis P1 between a stow away position as shown in fig. 1a and a use position for carrying the load as shown in fig. 1b. Accordingly, the load carrier platform 20 is connected to the attachment arrangement 10 via the pivot axis P1.

In the stow away position the load carrier platform 20 is folded in towards the attachment arrangement 10, and, in the use position the load carrier platform 20 is folded out with respect to the attachment arrangement 10 in the rearward direction x of the load carrier 1.

Furthermore, the pivot axis P1 is provided offset from the attachment arrangement 10 in the rearward direction x. According to example embodiments, a smallest distance x1 between the pivot axis P1 and the attachment arrangement 10, as seen in the length extension x of the load carrier 1, and at least when the load carrier platform 20 is in the use position, is 3 to 30 cm, such as 5 to 30 cm, for example 5-20 cm or 5-10 cm.

As shown in e.g. fig 1b, the load carrier 1 may be adapted so that a portion 22 of the load carrier platform 20 is provided and extends between the attachment arrangement 10 and the pivot axis P1 when the load carrier platform 20 is in the use position. This allows load to be provided also in this area between the pivot axis P1 and the attachment arrangement 10.

As further shown, when the load carrier platform 20 is in the use position, the portion 22 of the load carrier platform 20 may be provided in a support portion 12 associated with the attachment member 10. The support portion 12 provides support to the load carrier platform 10 so that downwardly directed forces outside the pivot axis P1 in the rearward direction x are accommodated by the support portion 12.

As further shown in e.g. figs. 1a-b, the load carrier 1 may further comprise at least one connection member 30 which mechanically connects the load carrier platform 20 to the attachment arrangement 10, wherein the pivot axis P1 is associated with the at least one connection member 30. In the shown example embodiment, the pivot axis P1 extends through the at least one connection member 30. Furthermore, as shown, the at least one connection member 30 may be configured as an arm member 30.

As shown, the at least one connection member 30 may comprise at least two connection member portions 32, 33, as seen in a plane defined by the height extension z and the rearward direction x of the load carrier 1. One connection member portion 32 extends downward in the height extension z, allowing the load carrier platform 20 to be provided further down with respect to the attachment arrangement 10, and another connection member portion 33 extends in the rearward direction x, thereby allowing the pivot axis P1 to be offset from the attachment arrangement 10 in the rearward direction x. In the example shown in figs. 1a-b, the at least one connection member 30 is L-formed.

The at least one connection member 30 is in the shown embodiment attached to the attachment arrangement 10 at an attachment position 31 on the attachment arrangement 10. In the shown embodiment, there are two attachment positions, 31, 34, which are offset from each other. The load carrier 1 is adapted so that the pivot axis P1 is provided below the attachment positions 31, 34 when the load carrier platform 20 is in the stow away position and also when it is in the use position, as seen in the height extension z of the load carrier 1. In the shown embodiment, the attachment of the at least one connection member 30 to the attachment member 10 is realized by screws or bolts.

As further shown in figs. 1a-b, the load carrier platform 20 may comprise one or more load receiving members 24 for receiving a load. In the shown embodiment, the load receiving members 24 are in the form of wheel trays for receiving bicycle wheels (not shown). The load carrier 1 is adapted so that at least one of the one or more load receiving members 24 is at least partly provided between the attachment position 31 on the attachment arrangement 10 and the pivot axis P1 when the load carrier platform 20 is in the stow away position, as seen in the height extension z of the load carrier 1. In the shown embodiment, the at least one of the one or more load receiving members 24 is also at least partly provided between the attachment position 34 on the attachment arrangement 10 and the pivot axis P1 when the load carrier platform 20 is in the stow away position.

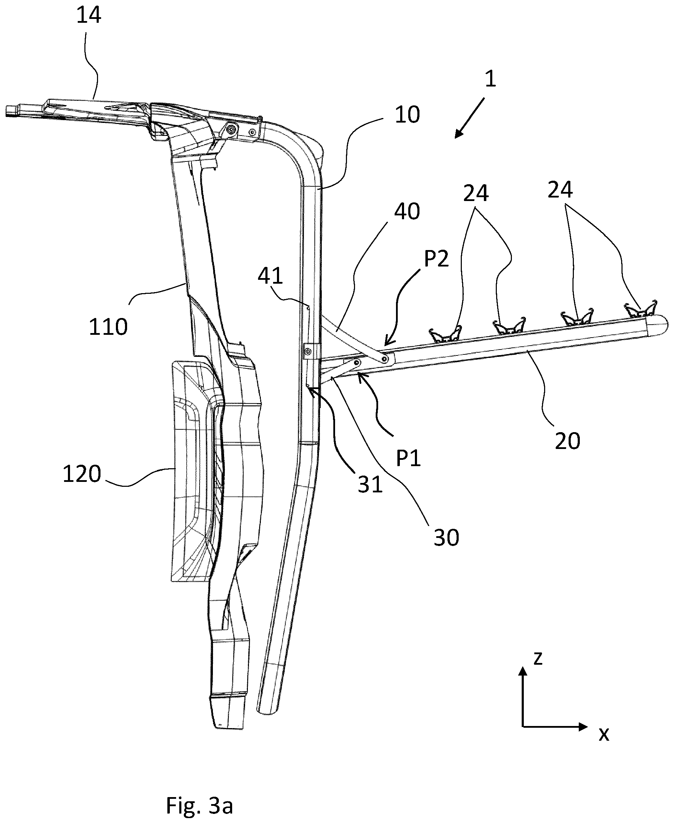

As further shown in e.g. figs. 1a-b, the at least one connection member 30 is rigidly fixed to the attachment arrangement 10. In other words, the at least one connection member 30 cannot be pivoted with respect to the attachment arrangement 10. However, in an alternative embodiment, as shown in figs. 3a-d, the at least one connection member can be pivoted with respect to the attachment arrangement.

The load carrier 1 may as further shown in figs. 1a-b be adapted so that the pivot axis P1 is fixed with respect to the attachment arrangement 10. Accordingly, the pivot axis P1 may always be provided at a constant distance from the attachment arrangement 10.

Furthermore, as shown in figs. 1a-b, the load carrier 1 may also be adapted so that the pivot axis P1 is provided below the load carrier platform 20 and/or below at least one load receiving member 24 of the load carrier platform 20 when the load carrier platform 20 is in the use position, as seen in the height extension z of the load carrier 1.

By the load carrier 1 configuration, an improved folding mechanism is achieved. This is achieved in that the pivot axis P1 whereabout the load carrier platform 20 is pivoted is provided offset, or further away, from the attachment arrangement 10 in the rearward direction x. This results in that a length L1 from the pivot axis to an outermost portion of the load carrier platform 20 will be shorter compared to if the pivot axis P1 would be provided directly on the attachment arrangement 10. As a result, when the load carrier platform 20 is provided in the stow away position, and substantially extends upward in the height extension z of the load carrier 1, the load carrier platform 20 may not extend upward in the height extension z as far as if the pivot axis would be provided on the attachment arrangement 10. Thereby, it can be avoided that the load carrier platform 20 extends above the roof of the vehicle whilst still enabling a large load carrier platform 20.

The load carrier 1 may further comprise a holding member 26 for holding and keeping the load carrier platform 20 in the stow away position. For example, as shown, the holding member 26 may be adapted to be releasably attached to the attachment arrangement 10 when the load carrier platform 20 is in the stow away position. In the shown embodiment, the holding member 26 is non-removably attached to the load carrier platform 20. Other configurations are of course also possible, such as an opposite configuration where the holding member is non-removably attached to the attachment arrangement 10 and removably attachable to the load carrier platform 20.

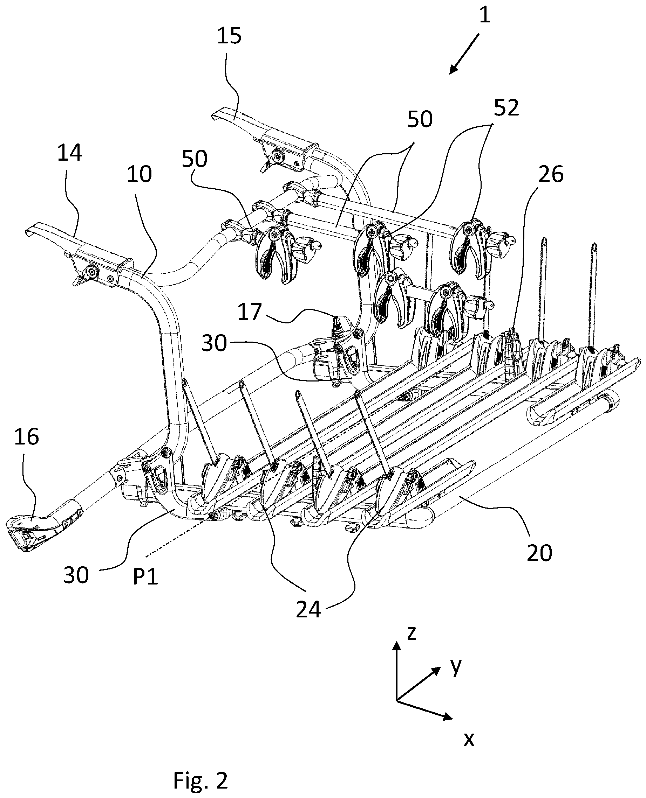

Fig. 2 depicts a perspective view of the load carrier 1 as shown in figs. 1a-b. As shown, the load carrier platform 20 may extend between two connection members 30 as mentioned in the above, wherein the connection members 30 are offset with respect to each other in the width extension y of the load carrier 1. As shown, and according to an example embodiment, the attachment configuration between the load carrier platform 20 and the attachment arrangement 10 may be mirrored in the width extension y so that it forms two equal, or similar, attachment interfaces between the load carrier platform 20 and the attachment arrangement 10. The attachment interfaces are thus separated from each other in the width extension y.

The load carrier 1 may as shown be formed by a frame structure. As such, the attachment arrangement 10 may be formed by a frame structure. In a similar manner, the load carrier platform 20 may also be formed by a frame structure. For example, the frame structures may be made of aluminum and/or any other rigid material for carrying a load. For example, the frame structures may comprise tube formed profiles, such as tube formed aluminum profiles.

The attachment arrangement 10 preferably comprises a first and a second upper attachment member 14, 15 for attaching the load carrier 1 to an upper portion of the vehicle at the rearward facing door or tailgate. In the shown example, the first and second upper attachment members 14, 15 are adapted to be attached to a vehicle rear spoiler (not shown). The first and second upper attachment members 14, 15 are offset from each other, as seen in the width extension of the load carrier 1.

Furthermore, in the shown embodiment, the attachment arrangement 10 comprises a first and a second lower attachment member 16, 17, for attaching the load carrier 1 to a lower portion of the vehicle at the rearward facing door or tailgate. For example, the first and second lower attachment members 16, 17 may be adapted to engage with an edge of the vehicle's tailgate. The lower attachment members 16, 17 are thus provided below the upper attachment members 14, 15.

As shown in fig 2, the pivot axis P1 may be provided close to the first and second lower attachment members 16, 17, as seen in the height extension z of the load carrier 1. For example, the pivot axis P1 may be provided 0-20 centimeters (cm) from the first and second lower attachment members 16, 17, as measured in the height extension z of the load carrier 1. The measurement corresponds to a smallest distance between the pivot axis P1 and the first and second lower attachment members 16, 17, as seen in the height extension z of the load carrier 1.

The load carrier 1 may as shown in fig. 2 further comprise one or more load securing arm members 50 for securing the load to the load carrier 1. In the shown embodiment, the load securing arm members 50 are configured to secure bicycles (not shown) to the load carrier 1, by gripping around bicycle frames. Accordingly, each load securing arm member comprises a gripping member 52 for gripping a bicycle frame. The gripping members 52 are in the shown embodiment gripping claws. The load securing arm members 50 are attached to the attachment arrangement 10 and can be pivoted between a use position and a stow away position. In the stow away position, the load securing arm members 50 are substantially extending in the height extension z, such as extending downward, and in the use position, the load securing arm members 50 are as shown extending in the rearward direction x.

The load carriers 1 as shown in the disclosed embodiments are all configured to carry bicycles. The load carriers 1 are as shown configured to carry the bicycles so that the longitudinal extensions of the bicycles extend in the width extension y of the load carrier 1. Accordingly, bicycles can be stacked on the load carrier platform 20, one after the other, in the length extension x.

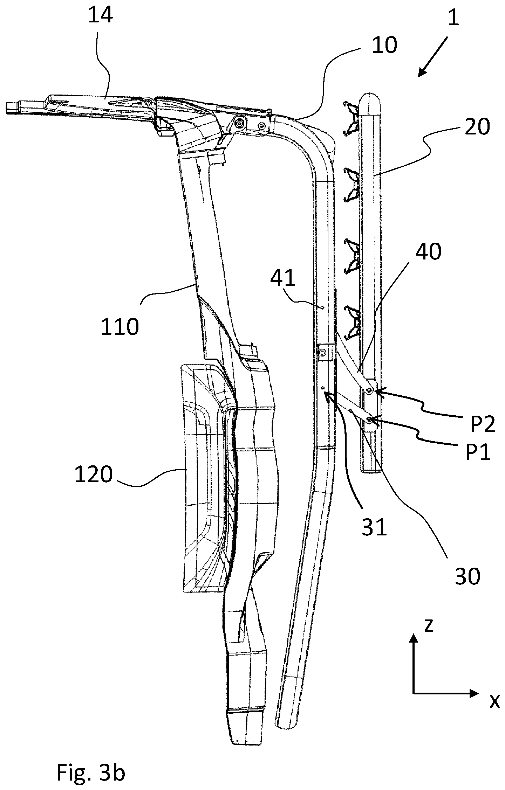

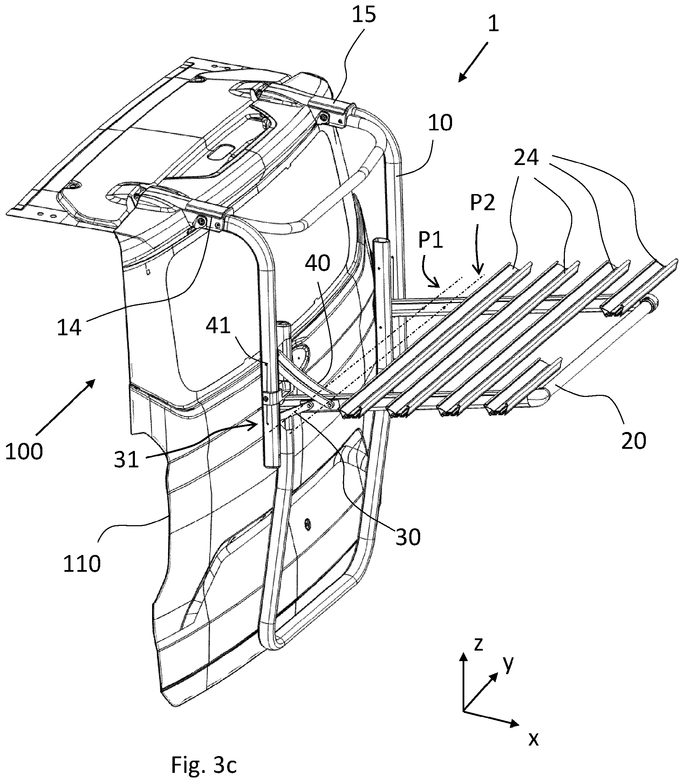

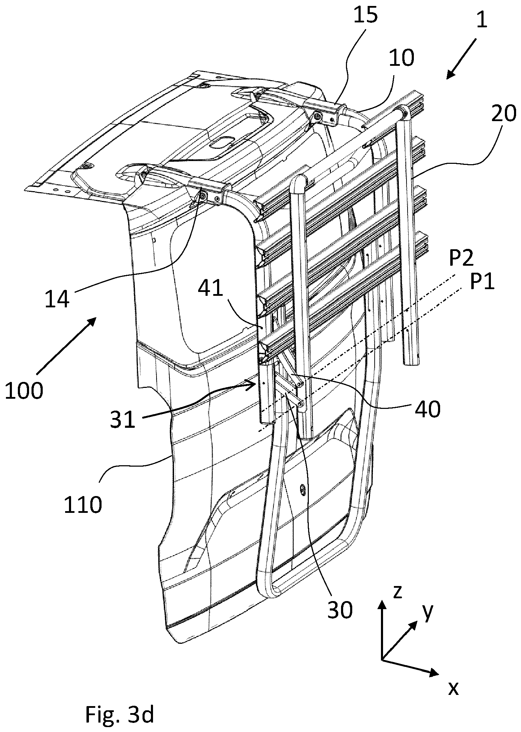

With respect to figs. 3a-d, another load carrier 1 according to the invention will be described. As mentioned in the above, the same reference characters refer to the same, or similar, elements, as described in the above, unless expressed otherwise. Fig. 3a depicts a side view of the load carrier 1 when the load carrier platform 20 is provided in the use position. Fig. 3c depicts a perspective view of the load carrier 1 when the load carrier platform 20 is provided in the use position. Fig. 3b depicts a side view of the load carrier 1 when the load carrier platform 20 is provided in the stow away position. Fig. 3d depicts a perspective view of the load carrier 1 when the load carrier platform 20 is provided in the stow away position. In figs. 3a-d, a portion of a vehicle 100 is also shown, indicating how the load carrier 1 can be attached to a rearward facing door or tailgate 110 of the vehicle 100. The upper attachment members 14, 15 for attaching the load carrier 1 to the vehicle 100 are here similar to the ones described with respect to fig. 2. The lower attachment members are for simplicity not shown in this embodiment.

The load carrier 1 is adapted so that the load carrier platform 20 can be pivoted about a pivot axis P1 between the stow away position the use position. Accordingly, the load carrier platform 20 is connected to the attachment arrangement 10 via the pivot axis P1.

The pivot axis P1 is also here provided offset from the attachment arrangement 10 in the rearward direction x.

Like the embodiments described with respect to figs. 1a-2, the load carrier 1 in figs. 3a-d comprises at least one connection member 30 which is attached to the attachment arrangement 10 at an attachment position 31 on the attachment arrangement 10.

However, the load carrier 1 as shown in figs. 3a-d is adapted so that the pivot axis P1 is provided above the attachment position 31 when the load carrier platform 20 is in the use position, as seen in the height extension z of the load carrier 1.

Still further, differing from the embodiments of figs. 1a-2, the load carrier 1 as shown in figs. 3a-d is adapted so that the pivot axis P1 is translatable with respect to the attachment arrangement 10.

The load carrier 1 may as shown be adapted so that the pivot axis P1 is moved downward with respect to the attachment arrangement 10 when the load carrier platform 20 is pivoted from the use position to the stow away position and so that the pivot axis P1 is moved upward with respect to the attachment arrangement 10 when the load carrier platform 20 is pivoted from the stow away position to the use position, as seen in the height extension z of the load carrier 1.

In addition, as shown, the load carrier 1 may be adapted so that the load carrier platform 20 can be pivoted about an auxiliary pivot axis P2 between the stow away position and the use position. The auxiliary pivot axis P2 is in the shown embodiment provided outside of the pivot axis P1, as seen when the load carrier platform 20 is in the use position, and above the pivot axis P1, as seen when the load carrier platform 20 is in the stow away position.

In the shown embodiment, the load carrier 1 comprises at least one auxiliary connection member 40 which mechanically connects the load carrier platform 20 to the attachment arrangement 10. In the shown embodiment, the at least one auxiliary connection member 40 is an auxiliary arm member 40.

The arm member 30 and the auxiliary arm member 40 may in this embodiment be denoted linkage arm members. The arm member 30 and the auxiliary arm member 40 are pivotally connected to the load carrier platform 20 and also pivotally connected to the attachment arrangement 10. Accordingly, the attachment position 31 is a pivotable connection. The auxiliary connection member 40 is in a similar manner connected to the attachment arrangement 10 at an attachment position 41. As such, the attachment position 41 is also a pivotable connection.

As shown, the auxiliary pivot axis P2 is associated with the at least one auxiliary connection member 40. In the shown embodiment, the auxiliary pivot axis P2 extends through the at least one auxiliary connection member 40. Like the pivot axis P1, the auxiliary pivot axis extends in the width extension y of the load carrier 1.

The attachment interfaces of the load carrier 1 in figs. 3a-d are also mirrored in the width extension y, like the load carrier 1 shown in fig. 2. For simplicity, the linkage arms 30, 40 are not shown on the distant side of the load carrier 1. Accordingly, the load carrier 1 according to the invention may comprise two separate attachment interfaces between the attachment arrangement 10 and the load carrier platform 20, one on each side of the load carrier 1, as seen in the width extension y.

Figs. 3a-b also show taillights 120 of the vehicle 100. By the configuration of the load carrier 1, the taillights can be more visible. For example, as shown, the load carrier platform 20 will be provided at least partly above the taillights 120 when it is in the use position. Thereby, bicycles, or any other load, on the load carrier platform 20 will not occlude the taillights 120 during driving.

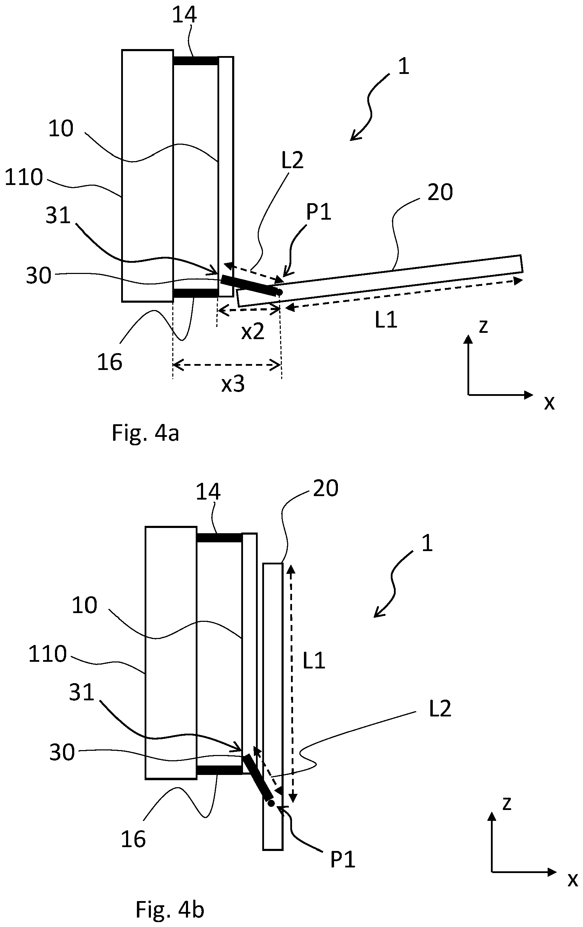

Figs. 4a-b depict schematic views from the side of a load carrier 1 according to an example embodiment of the present invention. As in the above, like reference characters refer to the same, or similar, elements.

Fig. 4s shows a smallest distance x2, as seen in the length extension x of the load carrier 1, and at least when the load carrier platform 20 is in the use position, between the pivot axis P1 and the lower attachment member 14. The distance x2 may be 15 to 40 cm, such as 15 to 35 cm, for example 20 to 35 cm or 25 to 35 cm. Additionally, or alternatively, a smallest distance x3, as seen in the length extension x of the load carrier 1, and at least when the load carrier platform 20 is in the use position, between the pivot axis P1 and the rearward facing door or tailgate 110 of the vehicle may be 15 to 40 cm, such as 15 to 35 cm, for example 20 to 35 cm or 25 to 35 cm.

As mentioned in the above, the at least one connection member 30 may be rigidly fixed to the attachment arrangement 10 or, alternatively, it may be pivotally connected to the attachment arrangement 10 at the attachment position 31. In the event the at least one connection member 30 is pivotally connected at the attachment position 31, an additional gain corresponding at least partly to a length L2 of the at least one connection member 30 can be achieved when the load carrier platform 20 is folded to the stow away position. More specifically, fig. 4b shows such an embodiment and also the situation when the load carrier platform 20 is folded to the stow away position, i.e. when it is extending upward in the height extension z. The pivot axis P1 can due to the additional pivoting movement at the attachment position 31 be moved downward with respect to the attachment arrangement 10, thereby reducing the height position of the outermost portion of the load carrier platform 20.

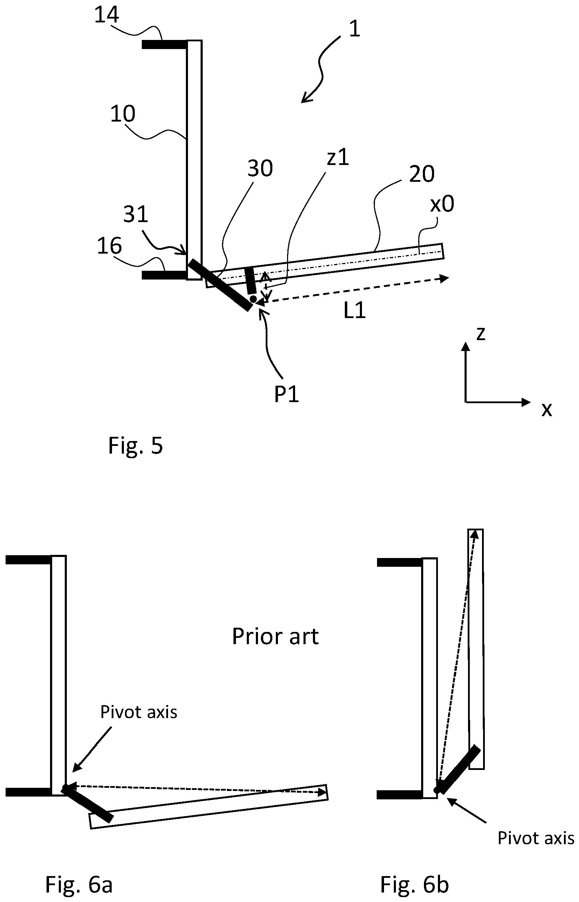

Fig. 5 depicts a schematic view from the side of a load carrier 1 according to another example embodiment of the present invention. As in the above, like reference characters refer to the same, or similar, elements. In this embodiment, the load carrier 1 is adapted so that the pivot axis P1 is provided below the load carrier platform 20 and/or below at least one load receiving member (not shown) of the load carrier platform 20 when the load carrier platform 20 is in the use position, as seen in the height extension z of the load carrier 1.

As shown, the pivot axis P1 may be provided below the load carrier platform 20 so that a distance z1 between the pivot axis P1 and a center line x0 of the load carrier platform 20 is 25-75 millimeters (mm), such as 25-50 mm or 30-40 mm. The center line x0 is here defined as a centerline of a frame element forming the load carrier platform 20, such as a tube formed element.

Figs. 6a-b show schematically a prior art load carrier when it is first in a use position and then in a stow away position. As can be seen, when the pivot axis is provided on the attachment arrangement, there is a significant risk that the load carrier platform will extend above the vehicle roof when load carrier platform is in the stow away position.

It is to be understood that the present invention is not limited to the embodiments described above and illustrated in the drawings; rather, the skilled person will recognize that many changes and modifications may be made within the scope of the appended claims.

## Claims

1. A load carrier (1) for a vehicle (100), comprising,
- an attachment arrangement (10) for attaching the load carrier (1) at a rearward facing door or tailgate (110) of the vehicle (100),
- a load carrier platform (20) for carrying a load, such as one or more bicycles,
wherein the load carrier (1) is adapted so that the load carrier platform (20) can be pivoted about a pivot axis (P1, P2) between a stow away position and a use position for carrying the load, wherein, in the stow away position the load carrier platform (20) is folded in towards the attachment arrangement (10), and, in the use position the load carrier platform (20) is folded out with respect to the attachment arrangement (10) in a rearward direction (x) of the load carrier (1),
wherein
the pivot axis (P1, P2) is provided offset from the attachment arrangement (10) in the rearward direction (x),
wherein the load carrier (1) further comprises at least one connection member (30, 40), such as at least one arm member (30, 40), which mechanically connects the load carrier platform (20) to the attachment arrangement (10), wherein the pivot axis (P1, P2) is associated with the at least one connection member (30, 40), such as the pivot axis (P1, P2) extends through the at least one connection member (30, 40),
wherein the at least one connection member (30, 40) is attached to the attachment arrangement (10) at an attachment position (31, 41) on the attachment arrangement (10),
wherein the load carrier (1) is adapted so that the pivot axis (P1, P2) is provided below the attachment position (31, 41), at least when the load carrier platform (20) is in the stow away position, as seen in the height extension (z) of the load carrier (1), and wherein the load carrier platform (20) comprises one or more load receiving members (24) for receiving a load, **characterized in that,** the load carrier (1) is adapted so that at least one of the one or more load receiving members (24) is at least partly provided between the attachment position (31, 41) on the attachment arrangement (10) and the pivot axis (P1, P2) when the load carrier platform (20) is in the stow away position, as seen in the height extension (z) of the load carrier (1).

2. The load carrier (1) according to claim 1, wherein the load carrier (1) is adapted so that a portion (22) of the load carrier platform (20) is provided and extends between the attachment arrangement (10) and the pivot axis (P1, P2) when the load carrier platform (20) is in the use position.

3. The load carrier (1) according to any one of the preceding claims, wherein the at least one connection member (30) comprises at least two connection member portions (32, 33), as seen in a plane defined by a height extension (z) and the rearward direction (x) of the load carrier (1), wherein one connection member portion (32) extends downward in the height extension (z), allowing the load carrier platform (20) to be provided further down with respect to the attachment arrangement (10), and another connection member portion (33) extends in the rearward direction (x), allowing the pivot axis (P1) to be offset from the attachment arrangement (10) in the rearward direction (x).

4. The load carrier (1) according to any one of the preceding claims, wherein the at least one connection member (30) is rigidly fixed to the attachment arrangement (10).

5. The load carrier (1) according to any one of claims 1-3, wherein the load carrier (1) is adapted so that the pivot axis (P1) is provided above the attachment position (31) when the load carrier platform (20) is in the use position, as seen in the height extension (z) of the load carrier (1).

6. The load carrier (1) according to any one of claims 1-4, wherein the load carrier (1) is adapted so that the pivot axis (P1) is fixed with respect to the attachment arrangement (10).

7. The load carrier (1) according to any one of claims 1 or 2 wherein the load carrier (1) is adapted so that the pivot axis (P1, P2) is translatable with respect to the attachment arrangement (10).

8. The load carrier (1) according to claim 7, wherein the load carrier (1) is further adapted so that the pivot axis (P1, P2) is moved downward with respect to the attachment arrangement (10) when the load carrier platform (20) is pivoted from the use position to the stow away position and so that the pivot axis (P1, P2) is moved upward with respect to the attachment arrangement (10) when the load carrier platform (20) is pivoted from the stow away position to the use position, as seen in the height extension (z) of the load carrier (1).

9. The load carrier (1) according to any one of claims 7-8, wherein the load carrier (1) is adapted so that the load carrier platform (20) can be pivoted about an auxiliary pivot axis (P2) between the stow away position and the use position.

10. The load carrier (1) according to any one of claims 7-9, further comprising at least one auxiliary connection member (40), such as at least one auxiliary arm member (40), which mechanically connects the load carrier platform (20) to the attachment arrangement (10).

11. The load carrier (1) according to claims 9 and 10, wherein the auxiliary pivot axis (P2) is associated with the at least one auxiliary connection member (40), such as the auxiliary pivot axis (P2) extends through the at least one auxiliary connection member (40).

12. The load carrier (1) according to any one of the preceding claims, wherein the load carrier (1) is adapted so that the pivot axis (P1, P2) is provided below the load carrier platform(20) and/or below at least one load receiving member (24) of the load carrier platform (20) when the load carrier platform (20) is in the use position, as seen in the height extension (z) of the load carrier (1).

## Patentansprüche

1. Lastträger (1) für ein Fahrzeug (100), umfassend,
- eine Befestigungsanordnung (10) zum Befestigen des Lastträgers (1) an einer nach hinten gerichteten Tür oder Heckklappe (110) des Fahrzeugs (100),
- eine Lastträgerplattform (20) zum Tragen einer Last, wie etwa eines oder mehrerer Fahrräder, wobei der Lastträger (1) so angepasst ist, dass die Lastträgerplattform (20) um eine Schwenkachse (P1, P2) zwischen einer Verstauposition und einer Gebrauchsposition zum Tragen der Last geschwenkt werden kann, wobei die Lastträgerplattform (20) in der Verstauposition in Richtung der Befestigungsanordnung (10) zugeklappt ist und in der Gebrauchsposition die Lastträgerplattform (20) in Bezug auf die Befestigungsanordnung (10) in einer hinteren Richtung (x) des Lastträgers (1) ausgeklappt ist,
wobei die Schwenkachse (P1, P2) von der Befestigungsanordnung (10) in der hinteren Richtung (x) versetzt bereitgestellt ist,
wobei der Lastträger (1) ferner mindestens ein Verbindungselement (30, 40), wie mindestens ein Armelement (30, 40), das die Lastträgerplattform (20) mit der Befestigungsanordnung (10) mechanisch verbindet, umfasst, wobei die Schwenkachse (P1, P2) dem mindestens einen Verbindungselement (30, 40), wie der Schwenkachse (P1, P2), die sich durch das mindestens eine Verbindungselement (30, 40) erstreckt, zugeordnet ist,
wobei das mindestens eine Verbindungselement (30, 40) an der Befestigungsanordnung (10) bei einer Befestigungsposition (31, 41) auf der Befestigungsanordnung (10) angebracht ist,
wobei der Lastträger (1) so angepasst ist, dass die Schwenkachse (P1, P2) unterhalb der Befestigungsposition (31, 41) bereitgestellt ist, mindestens, wenn die Lastträgerplattform (20) in der Verstauposition ist, wie in der Höhenerweiterung (z) des Lastträgers (1) gesehen, und wobei die Lastträgerplattform (20) ein oder mehrere Lastaufnahmeelemente (24) zum Aufnehmen einer Last umfasst, **dadurch gekennzeichnet, dass** der Lastträger (1) so angepasst ist, dass mindestens eines des einen oder der mehreren Lastaufnahmeelemente (24) zwischen der Befestigungsposition (31, 41) auf der Befestigungsanordnung (10) und der Schwenkachse (P1, P2) mindestens teilweise bereitgestellt ist, wenn die Lastträgerplattform (20) in der Verstauposition ist, wie in der Höhenerweiterung (z) des Lastträgers (1) gesehen.

2. Lastträger (1) nach Anspruch 1, wobei der Lastträger (1) so angepasst ist, dass ein Abschnitt (22) der Lastträgerplattform (20) bereitgestellt ist und sich zwischen der Befestigungsanordnung (10) und der Schwenkachse (P1, P2) erstreckt, wenn die Lastträgerplattform (20) in der Gebrauchsposition ist.

3. Lastträger (1) nach einem der vorstehenden Ansprüche, wobei das mindestens eine Verbindungselement (30) mindestens zwei Verbindungselementabschnitte (32, 33), wie in einer Ebene gesehen, die durch eine Höhenerweiterung (z) und die hintere Richtung (x) des Lastträgers (1) definiert ist, umfasst, wobei sich ein Verbindungselementabschnitt (32) in der Höhenerweiterung (z) nach unten erstreckt, um zu ermöglichen, dass die Lastträgerplattform (20) in Bezug auf die Befestigungsanordnung (10) weiter unten bereitgestellt werden kann, und sich ein anderer Verbindungselementabschnitt (33) in der hinteren Richtung (x) erstreckt, um es der Schwenkachse (P1) zu ermöglichen, von der Befestigungsanordnung (10) in der hinteren Richtung (x) versetzt zu werden.

4. Lastträger (1) nach einem der vorstehenden Ansprüche, wobei das mindestens eine Verbindungselement (30) an der Befestigungsanordnung (10) starr fixiert ist.

5. Lastträger (1) nach einem der Ansprüche 1 bis 3, wobei der Lastträger (1) so angepasst ist, dass die Schwenkachse (P1) über der Befestigungsposition (31) bereitgestellt ist, wenn die Lastträgerplattform (20) in der Gebrauchsposition ist, wie in der Höhenerweiterung (z) des Lastträgers (1) gesehen.

6. Lastträger (1) nach einem der Ansprüche 1 bis 4, wobei der Lastträger (1) so angepasst ist, dass die Schwenkachse (P1) in Bezug auf die Befestigungsanordnung (10) fixiert ist.

7. Lastträger (1) nach einem der Ansprüche 1 oder 2, wobei der Lastträger (1) so angepasst ist, dass die Schwenkachse (P1, P2) in Bezug auf die Befestigungsanordnung (10) in einer Translationsbewegung verschiebbar ist.

8. Lastträger (1) nach Anspruch 7, wobei der Lastträger (1) ferner so angepasst ist, dass die Schwenkachse (P1, P2) in Bezug auf die Befestigungsanordnung (10) nach unten bewegt wird, wenn die Lastträgerplattform (20) von der Gebrauchsposition in die Verstauposition geschwenkt wird, und dass die Schwenkachse (P1, P2) in Bezug auf die Befestigungsanordnung (10) nach oben bewegt wird, wenn die Lastträgerplattform (20) von der Verstauposition in die Gebrauchsposition, wie in der Höhenerweiterung (z) des Lastträgers (1) gesehen, geschwenkt wird.

9. Lastträger (1) nach einem der Ansprüche 7 bis 8, wobei der Lastträger (1) so angepasst ist, dass die Lastträgerplattform (20) um eine Hilfsschwenkachse (P2) zwischen der Verstauposition und der Gebrauchsposition geschwenkt werden kann.

10. Lastträger (1) nach einem der Ansprüche 7 bis 9, ferner umfassend mindestens ein Hilfsverbindungselement (40), wie mindestens ein Hilfsarmelement (40), das die Lastträgerplattform (20) mit der Befestigungsanordnung (10) mechanisch verbindet.

11. Lastträger (1) nach den Ansprüchen 9 und 10, wobei die Hilfsschwenkachse (P2) dem mindestens einen Hilfsverbindungselement (40) zugeordnet ist, wie etwa so, dass sich die Hilfsschwenkachse (P2), durch das mindestens eine Hilfsverbindungselement (40) erstreckt.

12. Lastträger (1) nach einem der vorstehenden Ansprüche, wobei der Lastträger (1) so angepasst ist, dass die Schwenkachse (P1, P2) unterhalb der Lastträgerplattform (20) und/oder unterhalb mindestens einem Lastaufnahmeelements (24) der Lastträgerplattform (20) bereitgestellt ist, wenn die Lastträgerplattform (20) in der Gebrauchsposition ist, wie in der Höhenerweiterung (z) des Lastträgers (1) gesehen.

## Revendications

1. Porte-charge (1) pour un véhicule (100), comprenant,
- un agencement de fixation (10) permettant de fixer le porte-charge (1) au niveau d'une porte ou un hayon orienté(e) vers l'arrière (110) du véhicule (100),
- une plate-forme de porte-charge (20) permettant de transporter une charge, telle qu'une ou plusieurs bicyclettes, dans lequel le porte-charge (1) est conçu de sorte que la plate-forme de porte-charge (20) peut être pivotée autour d'un axe de pivotement (P1, P2) entre une position d'arrimage et une position d'utilisation pour transporter la charge, dans lequel, dans la position d'arrimage, la plate-forme de porte-charge (20) est pliée en direction de l'agencement de fixation (10), et, dans la position d'utilisation, la plate-forme de porte-charge (20) est pliée par rapport à l'agencement de fixation (10) dans une direction arrière (x) du porte-charge (1),
dans lequel
l'axe de pivotement (P1, P2) est prévu de manière décalée par rapport à l'agencement de fixation (10) dans la direction arrière (x),
dans lequel le porte-charge (1) comprend en outre au moins un élément de liaison (30, 40), tel qu'au moins un élément de bras (30, 40), qui relie mécaniquement la plate-forme de porte-charge (20) à l'agencement de fixation (10), dans lequel l'axe de pivotement (P1, P2) est associé à l'au moins un élément de liaison (30, 40), de sorte que l'axe de pivotement (P1, P2) s'étend à travers l'au moins un élément de liaison (30, 40),
dans lequel l'au moins un élément de liaison (30, 40) est fixé à l'agencement de fixation (10) au niveau d'une position de fixation (31, 41) sur l'agencement de fixation (10),
dans lequel le porte-charge (1) est conçu de sorte que l'axe de pivotement (P1, P2) est fourni en dessous de la position de fixation (31, 41), au moins lorsque la plate-forme de porte-charge (20) est dans la position d'arrimage, comme observé dans l'extension en hauteur (z) du porte-charge (1), et dans lequel la plate-forme de porte-charge (20) comprend un ou plusieurs éléments de réception de charge (24) destinés à recevoir une charge, **caractérisé en ce que** le porte-charge (1) est conçu de sorte qu'au moins l'un parmi le ou les éléments de réception de charge (24) est au moins partiellement fourni entre la position de fixation (31, 41) sur l'agencement de fixation (10) et l'axe de pivotement (P1, P2) lorsque la plate-forme de porte-charge (20) est dans la position d'arrimage, comme observé dans l'extension en hauteur (z) du porte-charge (1).

2. Porte-charge (1) selon la revendication 1, dans lequel le porte-charge (1) est conçu de sorte qu'une partie (22) de la plate-forme de porte-charge (20) est fournie et s'étend entre l'agencement de fixation (10) et l'axe de pivotement (P1, P2) lorsque la plate-forme de porte-charge (20) est dans la position d'utilisation.

3. Porte-charge (1) selon l'une quelconque des revendications précédentes, dans lequel l'au moins un élément de liaison (30) comprend au moins deux parties d'élément de liaison (32, 33), comme observé dans un plan défini par une extension en hauteur (z) et la direction arrière (x) du porte-charge (1), dans lequel une partie d'élément de liaison (32) s'étend vers le bas dans l'extension en hauteur (z), permettant à la plate-forme de porte-charge (20) d'être fournie plus bas par rapport à l'agencement de fixation (10), et une autre partie d'élément de liaison (33) s'étend dans la direction arrière (x), permettant ainsi à l'axe de pivotement (P1) d'être décalé de l'agencement de fixation (10) dans la direction arrière (x).

4. Porte-charge (1) selon l'une quelconque des revendications précédentes, dans lequel l'au moins un élément de liaison (30) est fixé de manière rigide à l'agencement de fixation (10).

5. Porte-charge (1) selon l'une quelconque des revendications 1 à 3, dans lequel le porte-charge (1) est conçu de sorte que l'axe de pivotement (P1) est fourni au-dessus de la position de fixation (31) lorsque la plate-forme de porte-charge (20) est dans la position d'utilisation, comme observé dans l'extension en hauteur (z) du porte-charge (1).

6. Porte-charge (1) selon l'une quelconque des revendications 1 à 4, dans lequel le porte-charge (1) est conçu de sorte que l'axe de pivotement (P1) est fixe par rapport à l'agencement de fixation (10).

7. Porte-charge (1) selon l'une quelconque des revendications 1 ou 2, dans lequel le porte-charge (1) est conçu de sorte que l'axe de pivotement (P1, P2) est mobile en translation par rapport à l'agencement de fixation (10).

8. Porte-charge (1) selon la revendication 7, dans lequel le porte-charge (1) est en outre conçu de sorte que l'axe de pivotement (P1, P2) est déplacé vers le bas par rapport à l'agencement de fixation (10) lorsque la plate-forme de porte-charge (20) est pivotée de la position d'utilisation à la position d'arrimage et de sorte que l'axe de pivotement (P1, P2) est déplacé vers le haut par rapport à l'agencement de fixation (10) lorsque la plate-forme de porte-charge (20) est pivotée de la position d'arrimage à la position d'utilisation, comme observé dans l'extension en hauteur (z) du porte-charge (1).

9. Porte-charge (1) selon l'une quelconque des revendications 7 ou 8, dans lequel le porte-charge (1) est conçu de sorte que la plate-forme de porte-charge (20) peut être pivotée autour d'un axe de pivotement auxiliaire (P2) entre la position d'arrimage et la position d'utilisation.

10. Porte-charge (1) selon l'une quelconque des revendications 7 à 9, comprenant en outre au moins un élément de liaison auxiliaire (40), tel qu'au moins un élément de bras auxiliaire (40), qui relie mécaniquement la plate-forme de porte-charge (20) à l'agencement de fixation (10).

11. Porte-charge (1) selon les revendications 9 et 10, dans lequel l'axe de pivotement auxiliaire (P2) est associé à l'au moins un élément de liaison auxiliaire (40), tel que l'axe de pivotement auxiliaire (P2) s'étend à travers l'au moins un élément de liaison auxiliaire (40).

12. Porte-charge (1) selon l'une quelconque des revendications précédentes, dans lequel le porte-charge (1) est conçu de sorte que l'axe de pivotement (P1, P2) est fourni en dessous de la plate-forme de porte-charge (20) et/ou en dessous d'au moins un élément de réception de charge (24) de la plate-forme de porte-charge (20) lorsque la plate-forme de porte-charge (20) est dans la position d'utilisation, comme observé dans l'extension en hauteur (z) du porte-charge (1).
